# FASCICULE DE BREVET EUROPEEN

(11) **EP 3 863 815 B1**
(45) Date de publication et mention de la délivrance du brevet: **26.10.2022**
(21) Numéro de dépôt: 19787022.3
(22) Date de dépôt: 12.09.2019
(51) Int. Cl.: B25J 17/00, B25J 19/00, B25J 19/06

(54) **ARTICULATION DE ROBOT AVEC UNE VESSIE REMPLIE D'UN MATÉRIAU GRANULAIRE AYANT UNE FONCTION DE BLOCAGE**
ROBOTERGELENK MIT EINER MIT GRANULATMATERIAL GEFÜLLTEN BLASE MIT BLOCKIERFUNKTION
ROBOT JOINT WITH A GRANULAR MATERIAL FILLED BLADDER HAVING A JAMMING FUNCTION

(30) Priorité: 11.10.2018 FR 1859422
(43) Date de publication de la demande: 18.08.2021
(73) Titulaire: PSA Automobiles SA, 78300 Poissy (FR); Société Sapelem, 49070 Beaucouzé (FR)
(72) Inventeur: DIVERRES, Stéphane, 35380 Maxent (FR); GELIN, Frederic, 35131 Pont Pean (FR); ARNAUD, Yannick, 49070 Beaucouzé (FR); DENOEL, Pascal, 31000 Toulouse (FR)
(86) Numéro de dépôt international: PCT/FR2019/052104
(87) Numéro de publication internationale: WO 2020/074797

(56) Documents cités:
- DE-A1-102010 029 088
- US-A1- 2016 331 572

## Description

L'invention a trait au domaine de la préhension d'objets en vue de leur manutention, et, plus particulièrement, à la préhension d'objets dans le domaine de l'industrie automobile.

La préhension d'objets à l'échelle industrielle est généralement réalisée par un préhenseur, son positionnement par rapport à l'objet à saisir pouvant être amélioré par la présence d'organes d'articulation. Ces organes d'articulation sont, en soi, connus de l'homme du métier, et comprennent généralement une interface de support rattachée à un bras, une deuxième interface de préhension, telle qu'une ventouse, et une membrane reliant les deux interfaces et délimitant une enceinte comprenant un matériau granuleux. Ce type d'organe d'articulation permet d'améliorer la préhension par rapport aux articulations connues antérieurement.

Le document de brevet publié FR 3 051 701 A1 divulgue un dispositif de préhension d'objets. Ce dispositif comprend un support auquel est rattachée une membrane souple, cette membrane forme une enceinte déformable contenant un matériau granuleux. Un fluide peut également être injecté ou expulsé de la membrane par des passages situés dans le support. Le dispositif comprend, en outre, une ventouse rattachée à la membrane sur un côté opposé au support, la ventouse permettant l'adhésion du dispositif à des objets. Mais ces organes d'articulation restent fragiles du fait notamment des efforts exercés sur la membrane. Les documents US2016/331572 et DE102010029088 décrivent des dispositifs à dureté variable comportant une enceinte déformable remplie d'un matériau granuleux.

L'invention a pour objectif de pallier au moins un des inconvénients de l'état de la technique susmentionné. Plus particulièrement, l'invention a pour objectif d'améliorer la tenue mécanique de l'organe d'articulation.

L'invention a pour objet un organe d'articulation pour préhenseur d'objet, comprenant : une première interface ; une deuxième interface ; une membrane reliant les première et deuxième interfaces, ladite membrane formant une enceinte déformable ; un matériau granuleux dans l'enceinte déformable ; remarquable en ce que l'organe comprend, en outre : une enceinte extérieure renfermant la membrane et apte à être pressurisée en vue de comprimer ladite membrane ; et en ce que la deuxième interface comprend un bras monté pivotant sur l'enceinte extérieure et s'étendant dans l'enceinte déformable, en contact avec le matériau granuleux.

Selon un mode avantageux de l'invention, le bras comprend une portion dans l'enceinte déformable et en contact avec le matériau granuleux, ladite portion formant une surépaisseur.

Selon un mode avantageux de l'invention, la portion du bras formant une surépaisseur est une collerette. La collerette peut comprendre des orifices calibrés au travers desquels le matériau granuleux peut circuler lorsqu'il est à un état meuble.

Selon un mode avantageux de l'invention, le bras est monté pivotant et coulissant sur l'enceinte extérieure. Avantageusement, une manchette entoure le bras et assure une étanchéité entre le bras et l'enceinte déformable au niveau du montage coulissant dudit bras.

Selon un mode avantageux de l'invention, l'enceinte extérieure comprend une paroi latérale formant un contour fermé et s'étendant longitudinalement depuis la première interface, et une paroi frontale adjacente à la paroi latérale et opposée à la première interface.

Selon un mode avantageux de l'invention, la paroi frontale comprend une rotule traversée par le bras.

Selon un mode avantageux de l'invention, la première interface est un premier flasque, la paroi frontale est un deuxième flasque parallèle au premier flasque, et la paroi latérale s'étend entre les premier et deuxième flasques.

Selon un mode avantageux de l'invention, la membrane s'étend entre, et est reliée, aux premier et deuxième flasques.

Selon un mode avantageux de l'invention, l'enceinte déformable est en communication permanente avec l'air ambiant.

Selon un mode avantageux de l'invention, le bras s'étend en dehors de l'enceinte extérieure et comprend des moyens de fixation à un préhenseur tel qu'une ventouse. Les mesures de l'invention sont intéressantes en ce qu'elles permettent d'améliorer la tenue mécanique de l'organe d'articulation, essentiellement parce que l'enceinte extérieure permet d'exercer une pression plus importante sur le matériau granuleux dans l'enceinte déformable. Dans l'état de la technique, l'enceinte déformable est mise sous vide, signifiant que la pression extérieure exercée est limitée à la pression atmosphérique. Le fait que le bras soit en contact direct avec le matériau granuleux assure également un positionnement plus stable et résistant.

D'autres caractéristiques et avantages de la présente invention seront mieux compris à l'aide de la description et des dessins parmi lesquels :
- La figure 1 est une représentation schématique d'un robot de manipulation d'objets avec des organes d'articulation selon l'invention ;
- La figure 2 est une vue en perspective de l'organe d'articulation de la figure 1 ;
- La figure 3 est une vue en perspective éclatée de l'organe d'articulation des figures 1 et 2 ;
- La figure 4 est une vue en coupe de l'organe d'articulation des figures 1 à 3.

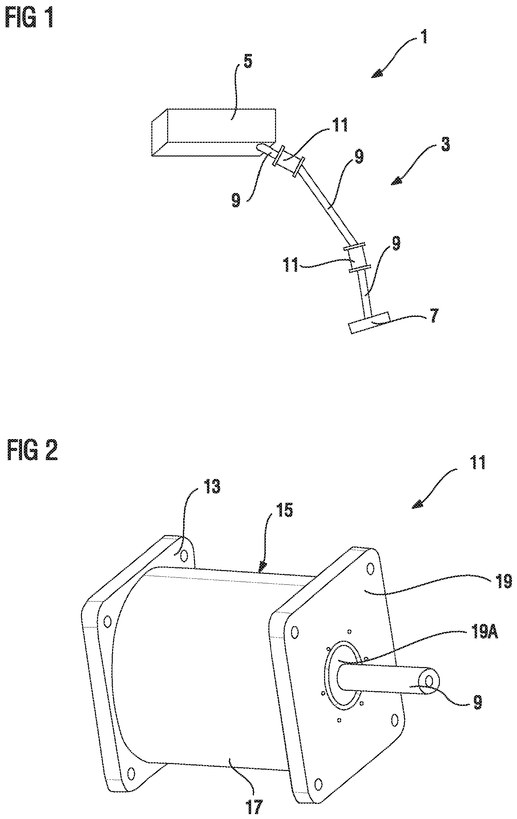

La figure 1 est une représentation schématique d'un robot de manipulation d'objets avec des organes d'articulation selon l'invention. La préhension d'objets, à l'échelle industrielle, est généralement réalisée par un ou des robots 1 de manipulation d'objets. Ces robots 1 peuvent comprendre un ou plusieurs membres 3 (un seul membre étant représenté à la figure 1), chaque membre 3 étant généralement constitué par un ou plusieurs bras 9. Chaque membre 3 comprend une extrémité proximale, fixée à un support 5, et une extrémité distale sur laquelle est monté un préhenseur 7, tel qu'une ventouse, le préhenseur 7 pouvant supporter un objet. L'organe d'articulation 11 selon l'invention est positionné à l'extrémité distale du membre 3, et permet le déplacement relatif du préhenseur 7.

La figure 2 est une vue en perspective de l'organe d'articulation selon l'invention. De manière générale, un organe d'articulation comprend une première interface et une deuxième interface avec une membrane joignant les deux interfaces. Dans le cadre de l'invention, la première interface de l'organe d'articulation 11 correspond à un premier flasque 13, la deuxième interface correspondant au bras 9 traversant l'organe 11. La membrane n'est pas visible à la figure 2, puisqu'elle est renfermée dans une enceinte extérieure 15. Cette enceinte extérieure 15 comprend une paroi latérale 17 formant un contour fermé qui s'étend longitudinalement depuis le premier flasque 13. L'enceinte 15 comprend, en outre, une paroi frontale adjacente à la paroi latérale 17, et opposée au premier flasque 13. La paroi frontale correspond à un deuxième flasque 19, les premier et deuxième flasques (13, 19) sont donc rattachés ensemble par la paroi latérale 17, et sont parallèles entre eux.

Le bras 9 de l'organe d'articulation 11 est monté pivotant et coulissant sur l'enceinte extérieure 15 grâce à la présence d'une rotule 19A, située dans la deuxième flasque 19, la rotule 19A étant traversée par le bras 9. Le bras 9 comprend à son extrémité libre des moyens de fixation (non représentés sur ces figures) permettant sa fixation au préhenseur (montré à la figure 1).

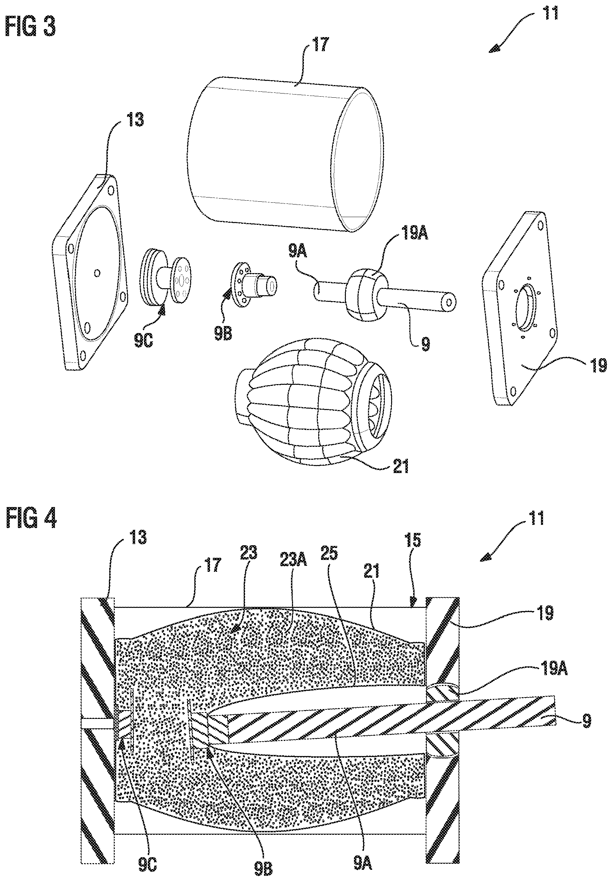

Les figures 3 et 4 sont respectivement des vues éclatée et en coupe de l'organe d'articulation des figures 1 et 2.

L'organe d'articulation 11 comprend, en outre, la membrane 21 qui relie les premier et deuxième flasques (13, 19) et forme une enceinte déformable 23. Cette enceinte 23 contient un matériau granuleux 23A, tel que du sable. Avantageusement, l'enceinte déformable 23 est en communication permanente avec l'air ambiant.

Une portion 9A du bras 9 de l'organe d'articulation 11 s'étend dans l'enceinte déformable 23, et peut être en contact avec le matériau granuleux 23A. Cette portion 9A forme une surépaisseur 9B, qui est préférentiellement une collerette. Cette surépaisseur 9B peut se déplacer dans l'enceinte déformable 23 en déplaçant le matériau granuleux 23A. La présence d'orifices dans la collerette permet le passage des particules du matériau granuleux 23A, et facilite ainsi le glissement du bras 9 dans l'enceinte déformable 23. Une pièce de fixation 9C est préférentiellement fixée sur le premier flasque 13, et assure la fixation de la membrane 21 sur le premier flasque 13 et son étanchéité. Une seconde collerette peut être prévue sur la pièce de fixation 9C.

Plus préférentiellement, le bras 9 et la rotule 19A sont entourés par une manchette souple 25, qui a pour vocation d'assurer l'étanchéité entre le bras 9 et l'enceinte extérieure 15, au niveau de la rotule 19A et du deuxième flasque 19. La manchette souple 25 est fixée sur le deuxième flasque 19 et sur la surépaisseur 9B du bras 9.

L'enceinte extérieure 15 est apte à être pressurisée, par exemple à l'aide d'un fluide comprimé, préférentiellement de l'air comprimé. Cette compression va servir à colmater le matériau granuleux 23A et ainsi fixer la position du bras 9 par rapport au reste de l'organe d'articulation 11.

## Revendications

1. Organe d'articulation (11) pour préhenseur d'objet, comprenant :
- une première interface (13) ;
- une deuxième interface (9) ;
- une membrane (21) reliant les première et deuxième interfaces (9, 13), ladite membrane (21) formant une enceinte déformable (23) ;
- un matériau granuleux (23A) dans l'enceinte déformable (23) ;
**caractérisé en ce que** l'organe (11) comprend, en outre :
- une enceinte extérieure (15) renfermant la membrane (21) et apte à être pressurisée en vue de comprimer ladite membrane (21) ; et
**en ce que** la deuxième interface comprend un bras (9) monté pivotant sur l'enceinte extérieure (15) et s'étendant dans l'enceinte déformable (23), en contact avec le matériau granuleux (23A).

2. Organe d'articulation (11) selon la revendication 1, **caractérisé en ce que** le bras (9) comprend une portion (9A) dans l'enceinte déformable (23) et en contact avec le matériau granuleux (23A), la portion (9A) formant une surépaisseur (9B).

3. Organe d'articulation (11) selon la revendication 2, **caractérisé en ce que** la portion (9A) du bras (9) formant une surépaisseur (9B) est une collerette.

4. Organe d'articulation (11) selon l'une des revendications 1 à 3, **caractérisé en ce que** le bras (9) est monté pivotant et coulissant sur l'enceinte extérieure (15).

5. Organe d'articulation (11) selon l'une des revendications 1 à 4, **caractérisé en ce que** l'enceinte extérieure (15) comprend une paroi latérale (17) formant un contour fermé et s'étendant longitudinalement depuis la première interface (13), et une paroi frontale (19) adjacente à la paroi latérale (17) et opposée à la première interface (13).

6. Organe d'articulation (11) selon la revendication 5, **caractérisé en ce que** la paroi frontale (19) comprend une rotule (19A) traversée par le bras (9).

7. Organe d'articulation (11) selon l'une des revendications 5 et 6, **caractérisé en ce que** la première interface est un premier flasque (13), la paroi frontale est un deuxième flasque (19) parallèle au premier flasque (13), et la paroi latérale (17) s'étend entre les premier et deuxième flasques (13, 19).

8. Organe d'articulation (11) selon la revendication 7, **caractérisé en ce que** la membrane (21) s'étend entre, et est reliée, aux premier et deuxième flasques (13, 19).

9. Organe d'articulation (11) selon l'une des revendications 1 à 8, **caractérisé en ce que** l'enceinte déformable (15) est en communication permanente avec l'air ambiant.

10. Organe d'articulation (11) selon l'une des revendications 1 à 9, **caractérisé en ce que** le bras (9) s'étend en dehors de l'enceinte extérieure (15) et comprend des moyens de fixation à un préhenseur (7) tel qu'une ventouse.

## Patentansprüche

1. Gelenkelement (11) für einen Objektgreifer mit:
- eine erste Schnittstelle (13);
- eine zweite Schnittstelle (9);
- eine Membran (21), die die erste und zweite Grenzfläche (9, 13) verbindet, wobei die Membran (21) eine verformbare Umhüllung (23) bildet;
- ein körniges Material (23A) in der verformbaren Hülle (23);
**dadurch gekennzeichnet, dass** das Organ (11) ferner umfasst:
- eine äußere Umhüllung (15), die die Membran (21) umschließt und unter Druck gesetzt werden kann, um die Membran (21) zu komprimieren, und
die zweite Grenzfläche einen Arm (9) umfasst, der schwenkbar an der äußeren Umhüllung (15) angebracht ist und sich in die verformbare Umhüllung (23) erstreckt und mit dem körnigen Material (23A) in Kontakt steht.

2. Gelenkelement (11) nach Anspruch 1, **dadurch gekennzeichnet, dass** der Arm (9) einen Abschnitt (9A) in dem verformbaren Gehäuse (23) umfasst, der mit dem körnigen Material (23A) in Kontakt steht, wobei der Abschnitt (9A) eine Verdickung (9B) bildet.

3. Gelenkelement (11) nach Anspruch 2, **dadurch gekennzeichnet, dass** der Abschnitt (9A) des Arms (9), der eine Verdickung (9B) bildet, ein Kragen ist.

4. Gelenkteil (11) nach einem der Ansprüche 1 bis 3, **dadurch gekennzeichnet, dass** der Arm (9) schwenkbar und verschiebbar am äußeren Gehäuse (15) gelagert ist.

5. Gelenkteil (11) nach einem der Ansprüche 1 bis 4, **dadurch gekennzeichnet, dass** der äußere Raum (15) eine Seitenwand (17), die eine geschlossene Kontur bildet und sich in Längsrichtung von der ersten Grenzfläche (13) erstreckt, und eine Stirnwand (19) umfasst, die an die Seitenwand (17) angrenzt und der ersten Grenzfläche (13) gegenüberliegt.

6. Gelenkteil (11) nach Anspruch 5, **dadurch gekennzeichnet, dass** die Stirnwand (19) ein Kugelgelenk (19A) umfasst, das von dem Arm (9) durchsetzt ist.

7. Gelenkelement (11) nach einem der Ansprüche 5 und 6, **dadurch gekennzeichnet, dass** die erste Grenzfläche ein erster Flansch (13) ist, die Stirnwand ein zweiter Flansch (19) parallel zum ersten Flansch (13) ist und die Seitenwand (17) sich zwischen dem ersten und dem zweiten Flansch (13, 19) erstreckt.

8. Gelenkelement (11) nach Anspruch 7, **dadurch gekennzeichnet, dass** die Membran (21) sich zwischen dem ersten und dem zweiten Flansch (13, 19) erstreckt und mit diesem verbunden ist.

9. Gelenkelement (11) nach einem der Ansprüche 1 bis 8, **dadurch gekennzeichnet, dass** der verformbare Raum (15) in ständiger Verbindung mit der Umgebungsluft steht.

10. Gelenkelement (11) nach einem der Ansprüche 1 bis 9, **dadurch gekennzeichnet, dass** sich der Arm (9) außerhalb des äußeren Gehäuses (15) erstreckt und Mittel zur Befestigung an einem Greifer (7), wie einem Saugnapf, umfasst.

## Claims

1. A hinge member (11) for an object gripper, comprising:
- a first interface (13);
- a second interface (9);
- a membrane (21) connecting the first and second interfaces (9, 13), said membrane (21) forming a deformable enclosure (23);
- a granular material (23A) in the deformable enclosure (23);
**characterized in that** the member (11) further comprises:
- an outer enclosure (15) enclosing the membrane (21) and capable of being pressurized to compress the membrane (21); and
the second interface comprises an arm (9) pivotally mounted on the outer enclosure (15) and extending into the deformable enclosure (23), in contact with the granular material (23A).

2. A hinge member (11) according to claim 1, **characterized in that** the arm (9) comprises a portion (9A) in the deformable enclosure (23) and in contact with the granular material (23A), the portion (9A) forming an extra thickness (9B).

3. A hinge member (11) according to claim 2, **characterized in that** the portion (9A) of the arm (9) forming an extra thickness (9B) is a flange.

4. A hinge member (11) according to one of claims 1 to 3, **characterized in that** the arm (9) is mounted so as to pivot and slide on the outer housing (15).

5. A hinge member (11) according to one of claims 1 to 4, **characterized in that** the outer enclosure (15) comprises a side wall (17) forming a closed contour and extending longitudinally from the first interface (13), and a front wall (19) adjacent to the side wall (17) and opposite the first interface (13).

6. A hinge member (11) according to claim 5, **characterized in that** the front wall (19) comprises a ball joint (19A) through which the arm (9) passes.

7. A hinge member (11) according to one of claims 5 and 6, **characterized in that** the first interface is a first flange (13), the front wall is a second flange (19) parallel to the first flange (13), and the side wall (17) extends between the first and second flanges (13, 19).

8. A hinge member (11) according to claim 7, **characterized in that** the membrane (21) extends between and is connected to the first and second flanges (13, 19).

9. A hinge member (11) according to one of claims 1 to 8, **characterized in that** the deformable enclosure (15) is in permanent communication with the ambient air.

10. A hinge member (11) according to one of claims 1 to 9, **characterized in that** the arm (9) extends outside the outer enclosure (15) and comprises means for fixing to a gripper (7) such as a suction cup.
